# EUROPEAN PATENT APPLICATION

(11) **EP 2 541 290 A2**
(43) Date of publication of application: **02.01.2013**
(21) Application number: 12171929.8
(22) Date of filing: 14.06.2012
(51) Int. Cl.: G02B 6/00

(54) **Backlight device and liquid crystal display apparatus using the same**

(30) Priority: 30.06.2011 JP 2011145123
(71) Applicant: Hitachi Consumer Electronics Co. Ltd., Tokyo 100-0004 (JP)
(72) Inventor: Ouchi, Satoshi, Chiyoda-ku,, Tokyo 100-8220, (JP); Kubota, Hidenao, Chiyoda-ku,, Tokyo 100-8220, (JP); Nagayoshi, Mayumi, Chiyoda-ku,, Tokyo 100-8220, (JP); Tsumura, Makoto, Chiyoda-ku,, Tokyo 100-8220, (JP)
(74) Representative: Calderbank, Thomas Roger

(57) **Abstract**

A backlight device (3) for irradiating light on a liquid crystal display panel (1), the backlight device (3) comprising a plurality of backlight blocks (4), wherein each backlight block (4) has a sheet-like reflection member (19, 32) which is disposed on a bottom surface of a chassis (11), a plate-like optical element (2) facing the reflection member (19, 32) and disposed spaced apart from the reflection member (19, 32), and LEDs (7) which are disposed within the space between the optical element (2) and the reflection member (19, 32) so as to emit light in a direction parallel to the light emission surface of the backlight device (3), wherein the light emitted by the LEDs (7) is transmitted through the optical element (2) while being repetitively reflected within the space defined between the optical element (2) and the reflection member (19, 32), so as to be guided towards the entire light emission surface of the backlight device (3), and thereby providing a surface backlight of uniform brightness with a simple structure.

## Description

The present invention relates to a backlight device applying a light emitting diode (LED) therein, for example, and a liquid crystal display apparatus using the same therein, and it relates, in particular, the backlight device for enabling to increase an efficiency of using the lights from a light source, thereby obtaining a picture of high-quality, and also the liquid crystal display apparatus using the same therein.

The liquid crystal display apparatus is widely used in various kinds of fields, because it canbe made thin and light-weight. But, since the liquid crystal display apparatus does not emit the lights by itself, a backlight is disposed on a rear surface of a liquid crystal display panel. On the liquid crystal display apparatus having a relatively large picture plane or frame, such as, a television display apparatus, etc., for example, a fluorescence tube has been applied as such backlight. However, since it encloses vapor of mercury therein, the fluorescence tube has a loadbeing large to the global environment, and inparticular, in and area, Europe or the like, for example, it is in a tendency of being inhibited from using thereof.

Also, in order to deal with a regulation or request for energy saving in recent years, reduction of electric power is requested for the liquid crystal backlight device.

Then, in the place of the fluorescence tube, it is started to apply the light emitting diode (LED) as a light source of the backlight. The number of the liquid crystal display apparatuses applying an LED light source is increasing, every year, even in the field of a large display device, such as the TV, etc. The backlight for the liquid crystal display apparatus must be a surface or plane-like light source, but the LED is a point or dot-like light source. Accordingly, in the backlight for the liquid crystal display apparatus applying the LED light source therein, an optical system is necessary for forming the plane-like light source from the dot-like light source, such as, the LED light source or the like (thus, a one for converting the dot-like light source into the plane-like light source). The followings are already known, as the conventional arts relating to the optical system for obtaining such plane-like light source.

For example, in the following Patent Document 3 is disclosed the configuration of disposing a light guiding plate just below a liquid crystal display panel, with forming line-like recessed portions on this light guiding plate, wherein side-emission type LED light sources are disposed in this recessed portion in a line-like manner. Further, in the Patent Document 3 is also disclosed the configuration, wherein the side-emission type LED light sources are constructed with applying optical parts, for emitting the lights from the LED light sources from side surfaces thereof, and on a reflection sheet portion are formed a diffusion reflection region having a function of reflecting/diffusing the light and a regular reflection region having a function of regular reflection, so as to reflect/diffuse the lights at a predetermined ratio, intentionally, and thereby to increase an efficiency of using the lights and also reduce unevenness of the brightness thereof.

Also, for achieving the energy saving, but through other approach to that, an area lighting control for controlling each of blocks while dividing a backlight device into plural numbers of blocks (or being called "a local dimming") is put into an actual practice. Such conventional technology is already known, as described in the following Patent Document 1, for example, disposing light guiding blocks divided in a tandem manner as a plane light source device having a large light emitting area. In this is disclosed in that, apileup portion between the light guiding blocks neighboring with each other forms a tang-like pi leup port ion being cut off, for protecting from shortage of the brightness generating, due to electrode portions at both ends of a primary light source, by taking the difference of brightness into the consideration, between both ends and a central portion as the primary light source, which is disposed for each of the light guiding blocks, and further that electrode portions at both ends of the primary light source are wound round and those electrode portions wound round are disposed in an outside of the region of the light guiding blocks.

Also, the following Patent Document 2 discloses therein, backlight units, which are divided, are combined with in the vertical andhorizontal directions, for a backlight in a large-size liquid crystal display, and further, a transparent acryl plate is put into or a desired space is held, between the backlight including the light guiding plate and the liquid crystal panel and the diffusion plate, for preventing the unevenness of brightness from generating in each of connection portions between the respective backlight units.

### <Prior Art Documents>

### <Patent Documents>

[Patent Document 1] Japanese Patent Laying-Open No. Hei 11-288611 (1999);
[Patent Document 2] Japanese Patent Laying-Open No. 2004-265635 (2004); and
[Patent Document 3] Japanese Patent Laying-Open No. 2006-236701 1 (2006).

The backlight relating to the conventional technologies mentioned above has the configuration of guiding the lights propagating in the horizontal direction, with using the light guiding plates, by a unit of the block or the backlight unit, to the side of the liquid crystal, to be emitted therefrom. For that reason, an optical member is necessary, newly, such as, the light guiding plate, etc., therefore it brings about a cost-up due to an increase of the optical members and also an increase of a number of parts for positioning/fixing thereof, and further needs a structural measure for fixing the light guiding plate, etc.

Also, when aligning the optical members, such as, the blocks or the light guiding plates of the backlight units, etc., there is apossibilityof generatingpositional shift or the like, therein. If the positional shift is generated, it brings about leakage of the light fromaboundarydefinedbetween the blocks or the backl ight units with each other, thereby generating a bright line, and/or brings about shortage of the light, thereby generating a dark line; i.e., bringing the spatial distribution of the lights emitting from the backlight to be un-uniform, and therefore bringing about a drawback of generating the so-calledunevenness of the brightness. For avoiding such drawback, with the conventional technologies described in the Patent Documents 1 and 2 motioned above, there is necessity of applying special structures therein, such as, treating machining on the light guiding blocks neighboring with each other, changing the configuration of the light emitting source, and further providing an acryl plate for use of diffusion in an upper portion of the light guiding plate, etc. Moreover, with those conventional technologies, since each block is so arranged that the brightness comes to be uniform in an inside thereof, there is brought about a drawback that the bright line on the boundary comes to be remarkable, on the contrary to that.

Also, with the conventional technology described in the Patent Document 3, it is necessary to form a diffusing reflection region having a diffusing reflection function and a regular reflection region having a regular reflection function on the reflection sheet portion, and therefore there is a drawback of restricting on thin-sizing of the backlight, as well as, needing a complex optical design; however the Patent Document 3 never describes about such problem therein.

The present invention is to provide a technology for enabling to obtain an appropriate optical output while increasing an efficiency of using the lights from the light source (for example, uniformity of brightness), with a simple structure, in a backlight device and a video display apparatus applying the same therein.

The present invention is characterized by the constituent elements described in the claims, which will be mentioned below. In more details thereof, the present invention comprises the followings.
(1) The backlight for irradiating lights onto the liquid crystal panel is constructed with plural numbers of backlight blocks, dividing the backlight in 2-dimensional manner, wherein each backlight block comprises a sheet-like reflection member, which is disposed on a bottom surface (i.e., on the side opposite to the liquid crystal panel) of that backlight block, a plate-like optical element, which is provided opposing to that reflection member and is disposed in the direction perpendicular to a light emitting surface of the backlight (i.e. , on the side of the liquid crystal panel), separating from that reflection member by a predetermined distance , and a light source (for example, a side-view LED(s)) for radiating the lights into the horizontal direction (in the direction in parallel with the light emitting surface of the backlight), so that the lights from that light source transmit through the optical element in the direction of the surface thereof while reflectingwithin a space definedbetween the optical element and the reflection member, repetitively, to be guided to the liquid crystal panel.
(2) In an inside of the each backlight block, such as, on the optical member and/or the reflection sheet mentioned above is/are provided a predetermined pattern(s).
(3) In a backlight device for irradiating lights onto a liquid crystal panel, plural numbers of backlight blocks, each having plural numbers of light sources, each having a light emitting axis (i.e. , an optical axis) in the direction in parallel with a light irradiating surface of the backlight, and being disposed in the direction perpendicular to that emitting axis, a sheet-like reflection member for reflecting the lights from said light sources, and a plate-like optical element, being disposed separating from that reflection member by a predetermined distance and for guiding the lights from the light sources, are disposed in parallel with in the direction of a surface of the backlight, wherein an optical control member for controlling or adjusting an amount of emission of the lights is provided on a rear surface (on the side facing to the reflection member) or a front surface (on the side facing to the liquid crystal panel) or both surfaces of the optical element mentioned above, or in the vicinity thereof.
(4) The light control member mentioned above has at least two (2) or more numbers of functions, among reflection, transmission, diffusion, shielding, absorption, re-emission, coloring, wavelength conversion and polarization of the lights.
(5) On the light control member or the optical element is provided patterns, each having a predetermined configuration, wherein a pitch or a density or a shape of those patterns in the horizontal direction is changed depending on the position of the light control member of the optical element, while keeping the pitch or the density or the shape of those patterns to be nearly equal to, in the direction perpendicular to the optical axes of the light sources, in the direction in parallel with the light emitting surface of the optical element or the rear surface thereof (i.e., the direction, in which the light sources are aligned).
(6) A condition, p≥a≥c is satisfied, where assuming that largeness (size) of the pattern is "a", in the direction perpendicular to the optical axes of the light sources, and in direction in parallel with the light emitting surface or the rear surface of the optical element, largeness of each light emitting surface is "c" of said light sources, and the pitch of the light sources is "p".
(7) In (6) mentioned above, further is satisfiedacondition, n p≥a≥0.5×e, where assuming that a pitch of said patterns is "e".
(8) In (6) mentioned above, further is satisfied a condition h≥a, where assuming that the distance is "h" between the optical member and the reflection member (i.e. , the diffusion distance) .
(9) Other pattern is provided at a position corresponding to that between two (2) light sources neighboring with each other, and a transmission factor "T" of the other pattern satisfies a condition, 0.1%≤T<50%.
(10) The patter of the predetermined shape has a deformed surface, having a concave/convex surface, a prism, a convex lens or a concave lens, and the deformed surface is formed through a mold injection, a laser machining or a printing.
(11) The optical element has a selective transmission factor control layer for enabling to control the transmission factor, selectively, at least upon basis of a relative and positional relationship with respect to the light sources, and a diffusion layer. Further preferably, the optical element builds up a laminated structure of piling up a brilliant layer, the transmission factor control layer, a transparent layer, and a diffusion layer, in an order starting from the light source.
(12) In (11) mentioned above, the selective transmission factor control layer is made up with a light shield layer having plural numbers of light takeout portions, an area or size of each light takeout portion per a standard area differs from, depending on an amount of lights irradiating on the light shield layer, per the standard area, which is determined from the relative and positional relationship with respect to the light sources.
(13) In (12) mentioned above, the light shield layer includes a reflection member of diffusion/reflection property.
(14) In (12) or (11) mentioned above, on the light shield layer is provided no light takeout portion, in the vicinity of an area or region where the amount of lights irradiating on the light shield layer, per the standard area, comes to the maximum.
(15) In any one of (11) to (14) mentioned above, the light takeout portion of the light shield layer is an opening of either one of a circular shape, an oval shape, or a slit shape, or a combination thereof. When applying a prism sheet as the optical sheet tobe disposedbetween the liquidcrystal panel and the optical element, it is preferable that a longitudinal direction of a slit of the light takeout portion is coincident with the direction, in which ridges of prisms of the prism sheet extend.
(16) In (1) to (15) mentioned above, there is a light source substrate for mounting the light sources thereon, and the light sources are mounted on the light source substrate in such a manner that the light emitting surfaces of the light sources are nearly coincident with an end portion of the light source substrate. Further, on the reflection member is provided an incline portion being inclined directing from an upper portion of the light source substrate to a bottom surface of the backlight.

According to the present invention, it is possible to obtain an appropriate optical output while increasing an efficiency of using the lights from the light source (for example, uniformity of brightness), even with a simple structure. Thus, with such simple structure of not using the light guiding plate, conventionally being necessary in the optical system for obtaining a plane-like light source, it is possible to obtain a uniformity of lights within a surface of the backlight unit, or a uniform distribution of brightness on the whole light emission surface of the backlight. Also, with such a predetermined pattern as was motioned above, it is possible to mitigate the difference of the brightness on the boundaries among the backlight units to be unremarkable, and also to reduce the unevenness of brightness within an each surface of the backlight blocks.

Also, by controlling plural numbers of light sources corresponding to the backlight blocks as a one (1) group of the light source, it is possible to control the brightness for each of the backlight blocks.

Those and other objects, features and advantages of the present invention will become more readily apparent from the following detailed description when taken in conjunction with the accompanying drawings wherein:
Fig. 1 is an exploded view for showing an outlook of the entire structures of a liquid crystal display (LCD), according to an embodiment of the present invention;
Fig. 2 is a cross-section view of a backlight device, according to the present embodiment;
Fig. 3 is a perspective view including a cross-section thereof, for showing the inner structures of the liquid crystal display including the backlight blocks therein, in relation to the present embodiment;
Figs. 4A and 4B are views for showing an example of forming patterns, according to the present embodiment;
Fig. 5 is a cross-section view for showing the backlight device according to the present embodiment and peripheral portions thereof, cutting into the direction perpendicular to an optical axis of a light source 7 and a backlight irradiation surface;
Fig. 6 is an explanation view for showing examples of forms of patterns, each bringing about a light/dark distribution of brightness from the liquid crystal display within the backlight block, separating for each backlight block;
Fig. 7 is a partial enlarged view of Fig. 6;
Fig. 8 is a cross-section view of a backlight device, according to the present embodiment;
Fig. 9 is view for showing an example of a reflection sheet to be applied in the backlight device according to the present embodiment;
Figs. 10A to 10D are views for showing other examples of the reflection sheet according to the present embodiment;
Figs. 11A to 11C are views for showing examples of a light shielding layer according to the present embodiment;
Figs. 12A to 12C are views for showing examples of the light shielding layer, building a prism function therein, according to the present embodiment; and
Fig. 13 is a front view of a LED 7.

Hereinafter, explanation will be given on a backlight device according to an embodiment of the present invention, in details thereof, by referring to drawings attached herewith. However, same reference numerals are given to elements having the same functions or structures among the different drawings, and therefore the duplicated explanations thereof will be omitted.

### <Embodiment 1>

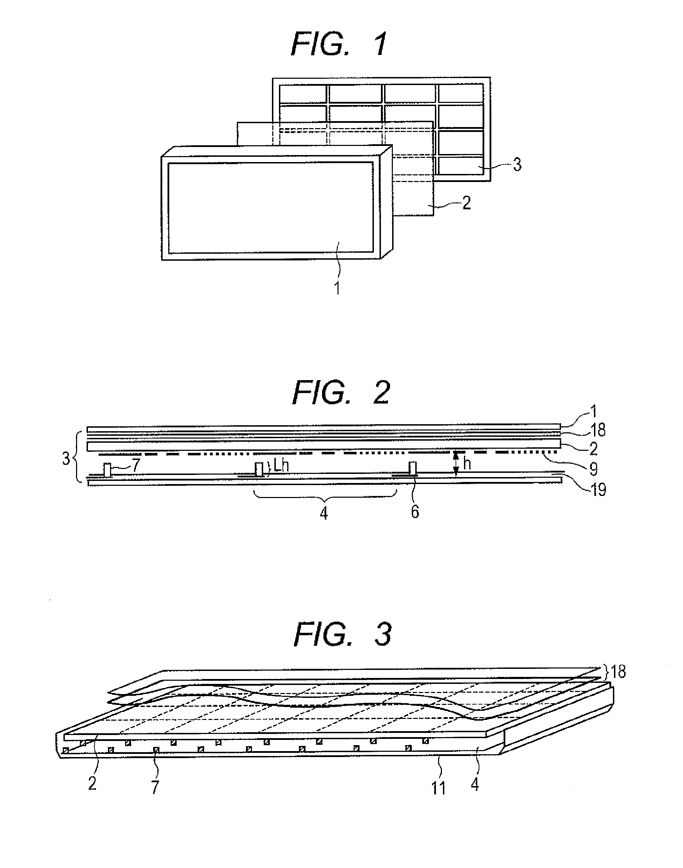

First of all, explanation will be made on an outlook of the entire structures of applying the backlight device according to the present embodiment into a video display apparatus, by referring to Figs. 1 to 3. Fig. 1 is an exploded view for showing the outlook of the entire structure of a liquid crystal display (e.g., LCD) having the backlight according to the embodiment of the present invention, Fig. 2 is a cross-section view of the backlight device, according to the present embodiment, cutting in the direction perpendicular to a light irradiation surface and in parallel with an optical axis, and Fig. 3 is a perspective view including a cross-section thereof, of the liquid crystal display including inner structures of backlight blocks and the backlight blocks, in relation to the present embodiment.

As is shown in Fig. 1, a liquid crystal display (LCD: Liquid Crystal Display) of a transmission type with applying a liquid crystal panel 1, which is widely spread as a display for use of display a video, comprises, as the entire structures thereof, a liquid crystal panel 1, an optical sheet or the like, including a diffusion plate, a diffusion sheet, a polarization plate, a polarization film, etc., and a backlight device 3. The backlight device 3 according to the present embodiment is made up with, as is shown in Fig. 2, for example, disposing plural numbers of backlight blocks 4 on a plane or a surface (i.e., in direction of a light irradiation surface of the backlight device), being combined with in a matrix manner, and thereby to obtain a uniform brightness on a large-size backlight device 3. On the liquiddisplay, the backlight device 3 is necessary for irradiating lights on a rear surface of the liquid crystal panel 1, and this backlight device 3 includes, depending on the structure thereof, a direct type, a side-light (or edge-light) type and a hybrid type of combining the direct type and the side-light type. This hybrid type indicates or means the structure of dividing a backlight into plural numbers of backlight blocks, thereby to control the light intensity, respectively, i.e., for enabling an area control. That hybrid method is also called, a "slim block type" . The backlight device 3, according to the embodiment of the present invention, relates to the slim block type, and in particular, relates to the structure of dividing the backlight into plural numbers of backlight units 4, while applying a light source of a side-view type.

The backlight device 3 according to the present embodiment, as is shown in Fig. 2, is disposed on a side of the rear surface of the liquid crystal panel 1, for irradiating lights on the liquid crystal panel 1, wherein there are provided a light source 7, including a LED or a laser or a light emission tube, etc., and having a light emission axis (i.e., an optical axis) in parallel with the horizontal direction (i.e., the surface of the liquid crystal panel or the light irradiation direction of the backlight device), a reflection sheet 19, being a reflecting member for reflecting the lights from the light source, and a plate-like an optical element 2 for guiding the lights from the light source 7 and the reflection sheet 19 to a side of the liquid crystal panel 1, being provided to face the reflection sheet 19 and also disposed to separate from the reflection sheet 19 by a predetermined distance. Herein, it is assumed that the light source 7 is a LED of side-view type emitting lights in the direction in parallel with an electrode surface thereof. Hereinafter, the light source 7 may be called "LED 7". Also, the reflection sheet 19 is provided on a chassis (will be mentioned later) locating on a bottom surface of the backlight device 3. Further, the light source 7 is mounted on a LED substrate 6, e.g., a light source substrate.

The backlight device 3 mentioned above, as is shown in Fig. 2, builds up a one (1) backlight block 4, including one (1) piece of LED 7 (in actual, aligning plural numbers of LED 7 in the direction of depth on a paper surface of drawing), the optical element 2 disposed between the LEDs 7 themselves, the reflection sheet 19 and a space between them, in the direction perpendicular to the light irradiation surface and in parallel with the optical axis of the LED 7, for example. And, controlling the LED 7, separately, corresponding to each backlight block 4, enables control of the light amount or the light intensity of each backlight block, respectively. Thus, the present embodiment, with such structures mentioned above, achieves an area control (i.e., local dimming) .

As the optical element 2 is applied, for example, a diffusion plate, a transparent acryl plate, a mirror-surface plate, a diffusion plate with fine patterns, an optical sheet, an optical characteristic control plate, a polarization select plate, etc. On the rear surface of this optical element 2 is provided a light control member 9 for controlling or adjusting a supply amount of lights onto the optical element 2 depending on the position of the optical element 2. In the example shown in Fig. 2, although the light control member 9 is provided on the rear surface of the optical element 2; however it may be provided on a front surface of the optical element or on both of the rear surface and the front surface thereof. This light control member 9 has predetermined light controlling functions, and that functions include at least two (2) or more of the followings: the functions of reflecting, transmitting, diffusing, shielding, absorbing, re-emitting, coloring, converting wavelength and polarizing the lights of a predetermined amount, in a two-dimensional manner, for example.

With this, a part of lights incident thereon passes through the light control member 9 and on the spot it is emitted from the optical element 2 as the diffusion light. Also, other part of the lights incident thereon is reflected upon the light control member 9, and it propagates in the direction of the optical axis of the light source 7 within the space mentioned above in cooperation with the reflection function by the reflection sheet 19 mentioned above; i.e., the lights are guided or transmitted far from the light source 7. Namely, the light control member 9 reflects a part of the lights from the light source 7 and the light reflected on the reflection sheet 19 thereon, while passing through other part thereof, and conducts this, along the direction of the optical axis, repetitively, and thereby supplying the lights up to a tip portion of the backlight block 4 (i.e., a portion opposite to the position of the light source 7), fully. With this, it is possible to obtain a uniform distribution of brightness, as well as, an increase or improvement of an efficiency of using the lights, irrespective of sizes of the backlight block 4. On the light control member 9 is provided slits or patterns for achieving the transmission and the reflection of the light mentioned above.

The optical element 2 and the light control member 9, in particular, the light control element 9 changes optical functions thereof, such as, the size or the configuration of the slits or thepattern, oratransmissionfactorof lights, areflectionfactor, diffusivity, a degree of capture, a propagation rate, a polarization transmission factor, a color transmission factor and spectral characteristics, etc., as it is far from the vicinity of the light source 7 in the direction of the optical axis of the light source 7. With doing this, it is possible to achieve the uniformity within the backlight block 4, easily.

Herein, when assuming that the distance between the optical element 2 and the reflection sheet 19 (i.e., the height of the space mentioned above) is "h", the height of the LED 7 "Lh", respectively, then it is preferable to bring the relationship between the distance "h" and the height "Lh" into 5Lh>h>1.2Lh. With doing so, it is possible to enlarge or diffuse the lights leaking from an upper surface of the LED 7, and also a hotspot (s) generating in the vicinity of the light emitting portion of the LED 7 (i.e., a portion where the light comes to be bright locally), within the space having the distance "h", according to so-called a COS⁴ angle (i_{.}e., a low of 4^{th} power), and thereby bringing it/them to be uneven, i.e., being difficult to be recognized. The condition mentioned above can be also called, the distance necessary for reducing the light passing through the light control member 9 directly entering from the LED 7, because the side-view type LED 7 and the light control member 9 come close too much.

Fig. 3 is a stereographic view of an outlook of the backlight according to the present embodiment. The light sources 7 are aligned on a metal chassis 11, being made of aluminum, etc., for example, together with substrates (but not shown in the figure), in the horizontal direction of the liquid crystal panel. The optical element 2 is disposed, while providing a predetermined distance from the light source 7. As the optical element 2 may be used a stuff, such as, a general diffusion plate or the like, which is applied in the backlight device of fluorescence tube-type, such as, CCFL, etc., for example. With this, it is possible to achieve the backlight device 3 of slim block-type, cheaply.

Also, on the optical element 2 is arranged a group of optical sheets 8, such as, prism sheets or brightness increasing sheets, etc., thereby reducing the unevenness of brightness on the whole irradiation surface of the backlight. In Fig. 3, the group of optical sheets includes plural numbers of the optical sheets, but may include only one (1) thereof.

Further in Fig. 3, although there are depicted dotted lines on the optical element 2, however those are drawn for the purpose of vertically sectioning the backlight block 4; but in actual, the backlight block 4 is not separated, physically, nor provided with grooves or the like for sectioning the backlight block 4. In the present embodiment, it is assumed that the optical element 2 is constructed with one (1) piece of a plate-like member (the diffusion plate) . Depending on the necessity thereof, the grooves for section the backlight block 4 may be provided on the front surface (on the side of the liquid crystal panel) or the rear surface (on the side of the chassis 11) of the optical element 2.

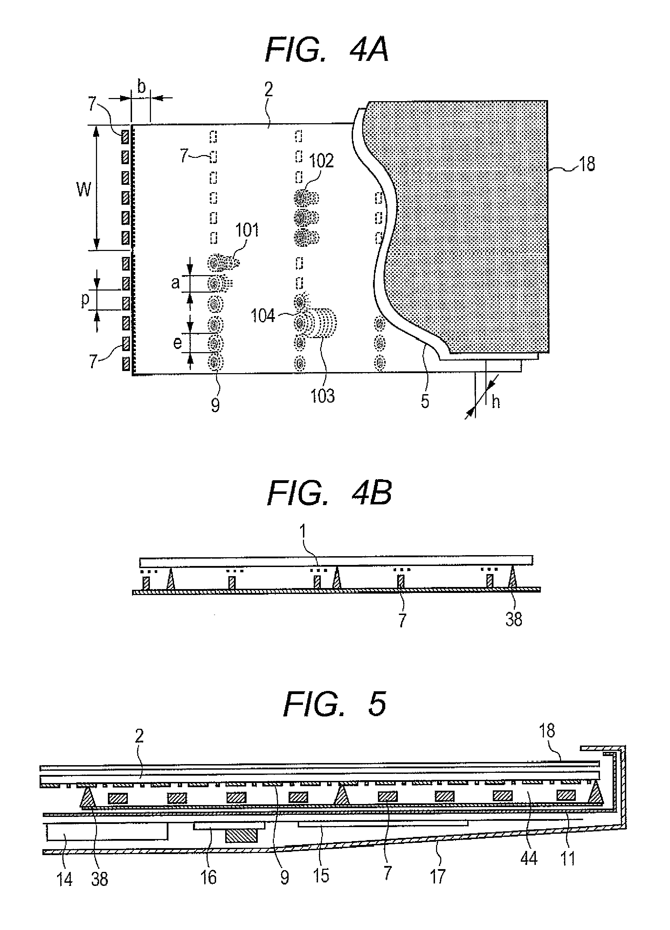

Figs. 4A and 4B show an upper view and a cross-section view of the outlook of the backlight device according to the present invention, respectively. In the example shown in Figs. 4A and 4B, on the front surface or the rear surface or both of them of the light control member 9 or the optical element 2 are provide patterns 101, 102 and 103, each having a predetermined shape or configuration. Those patterns 101 to 103 are shown under the condition of being seen from the side of the liquid crystal panel 1. Further, "W" in Fig. 4A indicates width of one (1) piece of the backlight block (i.e., the size of the light source 7 in the direction perpendicular to the optical axis). Thus, in this example, six (6) sets of the light sources 7 (e.g., the side-view LED) for the backlight block. Of course, a number of the light sources 7 per one (1) backlight block should not be restricted to this.

As shown in the figures, patterns 101 to 103, being formed in the direction of the optical axis of the light source 7 (i.e., in the left/right direction on the paper surface) are changed, in pitches, densities or shapes thereof, depending on the distance from the light source 7. On the other hand, patterns 91, being formed in the direction of the vertical direction to the optical axis of the light source 7 (i.e. , in the up/down direction on the paper surface) are same in the pitch, the density or the shape thereof. In more details, the patterns 101 to 103 are formed, being extended or expanded in the optical direction much more than in the direction opposite to the light emitting direction (the optical direction) of the light source 7. Also, the patterns 101 to 103 are formed, being changed depending on the distance from the light source 7 in the optical direction thereof; for example, it may be formed in a shape of being tapered or thinner much more, as the distance from the light source 7 becomes larger in the optical direction thereof, like the pattern 101, in a shape of combining an oval having the major or long axis in the optical direction of the light source 7, with an oval perpendicular to the direction of the optical axis, like the pattern 102, or in a shape of expanding much more as the distance from the light source 7 becomes larger in the direction of the optical axis, like the pattern 103.

Basically, the patterns 101 to 103 mentioned above are formed on the rear surface of the optical element 2, however they may be provided on the front surface of the optical element 2. Also, the patterns 101 to 103 may be formed, by attaching a print sheet, a thermal transfer sheet, a reflection/transmission sheet having holes, a reflection with patterns, or an optical sheet, on which the patterns are printed, on the rear surface or the front surface or both of them of the optical element 2, in the vicinity of the light source 7.

As the patterns 101 to 103 may be applied any kind of shapes or made from any kind of materials, as far as they can control or adjust the light shielding function, the transmission, the reflection and/or the propagation rate, etc., depending on the position (i.e., the distance from the light source 7). For example, density of the patterns is reduced as they are separated from the light source 7, gradually, in the direction of the optical axis of the light source 7, to increase the light shielding and the reflection to be large in the vicinity of the light source 7, so that an amount of transmitting lights therethrough comes to be less than 10%, while bringing the transmitting lights to be large at the positions far from the light source 7. With this, not only the lights from the light source 7 advancing into the axial direction, but also the lights propagating 2-dimensionally (e.g., radially) are increased in the amount of transmission thereof, and therefore it is possible to rise up the amount of lights emitting to the liquid crystal panel depending on the distance from the light source 7. And, with such structure, it is possible to reduce the unevenness of brightness in the direction of the optical axis of the light source 7, and also to increase a uniformity of brightness within the backlight unit and on the front surface of the backlight irradiation surface.

The patterns 101 to 103 mentioned above can be formed with such an aggregate of fine dots, as is shown in Figs. 4A and 4B, and an outer configuration of such aggregation of dots can be formed into various kinds of shapes, such as, a water drop, a curved line, a dotted line, radial straight lines, radial curved lines, etc. Also, in the aggregate of dots, with changing the density of the dots, gradually, depending on the distance from the light source 7, such as, gradations or the like, it is possible to increase a sensitivity of error due to the positional shift between the pattern and the light source 7.

Also, when forming through printing, the patterns can be adjusted, easily, on a film-thickness of ink, a color of ink (applying the gradations by mixing the colors, such as, blue and black, thereby to control the transmission factor), a dot size, a dot shape, a pattern configuration just upon the LED, thickness of orienting, and therefore it is possible to form the outer configuration of the dots and/or the aggregation of dots, more preferably. Accordingly, when forming the patterns through the printing, the uniformity of brightness can be increased, much more.

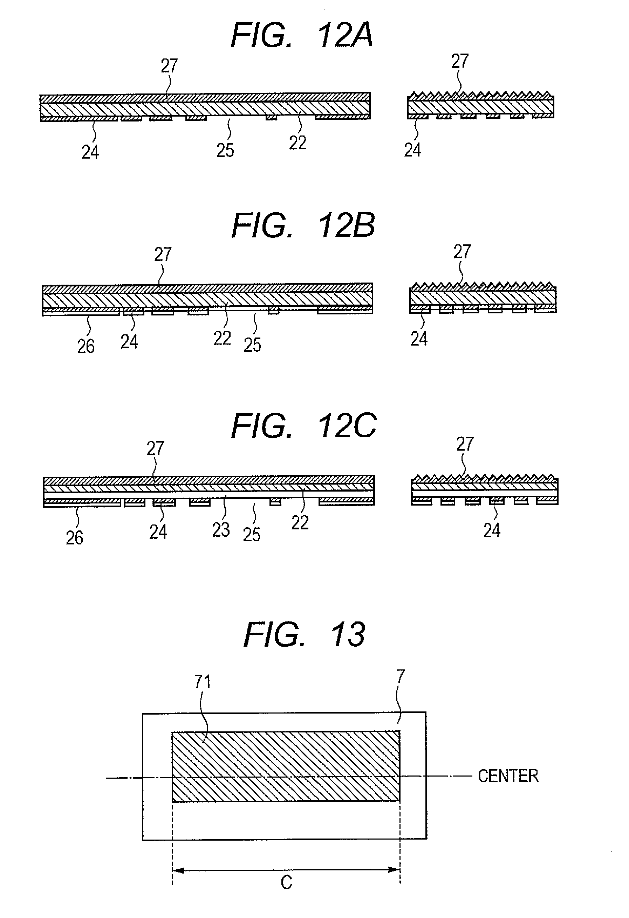

Herein, as is shown in Figs. 4A and 4B, if it is assumed that the largeness (i.e., the size) of the pattern mentioned above is "a" in the direction perpendicular to the optical axis of the light source 7 and in the direction in parallel with the light emitting surface or the reverse surface of the optical element 2 mentioned above (i.e., the up/down direction on the paper surface), the largeness of a longitudinal direction of a light emitting surface 71 of the light source 7 is "c" (see Fig. 13), and a pitch of aligning the light sources 7, then they satisfy the condition p≥a≥c. Also, if assuming that the pitch of the patterns is "e", they satisfy the condition p≥a≥0.5e. Further, also a relationship between the distance "h" mentioned above and the size "a" of the pattern mentioned above satisfies the condition h≥a. And further, another pattern 104 is provided on the optical element 2 mentioned above, at the position corresponding to between two (2) sets of the light sources neighboring with each other, and the transmission factor "T" of that another pattern is so determined to satisfy the condition 1%≤T<50%.

Fig. 5 shows the cross-section of the backlight device according to the present embodiment and peripheral portions thereof, perpendicular to the direction of the optical axis of the light source 7 and the light irradiating surface of the backlight.

As shown in the figure, a signal control substrate 15, an LED drive circuit 16 and a power source 14 are disposed between a back cover 17, being the rear surface housing of the liquid crystal display apparatus, and the chassis 11. The signal control substrate 15, the LED drive circuit 16 and the power source 14 are attached on the chassis 11. The chassis 11 may be one pasted the reflection sheet 19 mentioned above thereon. Also, it is possible to form a contraction on the chassis 11 pasted with the reflection sheet 19 through the pressing work, so as to form a curved surface or an inclined surface along the optical axis of the light source 7, and thereby changing the reflection angles of the lights upon the surface of the reflection sheet 19. With this, there can be obtained an effect of propagating the lights, easily, from the light source 7 in the direction of the optical axis thereof, and increasing the amount of lights to be supplied to the tip portion of the backlight block 4 (e. g. , the portion opposite to the position of the light source 7) much more.

The space between the reflection sheet 19 and the light control member 9 is held by pin molds 38 having a corn shape, maintain a predetermined distance therefrom. With this, the lights can emit, gradually, from the light control member 9 and the optical element 2, while propagating within the backlight block 4, and thereby enabling to control a uniform light as a whole by a unit of each the backlight block.

By referring to Fig. 2, again, the backlight device 3 according to the present embodiment comprises, basically, the LED 7, as the light source mounted on the LED substrate 6, the optical element 2 for guiding the lights from the LED 7 to the liquid crystal panel 1, effectively, the reflection sheet 19 for supplying the lights to the optical element 2, and the space between the optical element 2 and the reflection sheet 19, for propagating the lights in the direction of the optical axis of the LED 7, preferably. On the rear surface of the optical element 2, which is provided on the liquid crystal panel 1 in that space, is provided the light control member 9, and this achieves the gradual emission of the lights from the LED 7 along the direction of the optical axis of the LED 7, and the uniform distribution of the lights for the backlight block 4.

Herein, in the example of the structures shown in Fig. 2, the backlight block 4 is formed to be rectangular in the shape thereof seen from the light irradiation surface of the backlight device 3, and the lights from the LED 7 advances in the longitudinal direction thereof (i.e., from the left to the right on the paper surface of Fig. 3) and are reflected on the rear surface (facing to the reflection sheet 19) of the backlight block 4; thereby the lights advance to the liquid crystal panel 1. The LEDs 7 are aligned in plural numbers thereof, at an appropriate distance therebetween on the short side of the backlight block 4 (i.e., the vertical direction on the paper surface of Fig. 3) . The LEDs 7 may be aligned on the longitudinal side of the backlight block 4. However, in the present embodiment, although the explanation is made that the light source 7 is the side-view type LED 7; however, it may be a laser light source if it is the dot-like light source. Also, a line-like light source is applicable, such as, the fluorescence tube, etc.

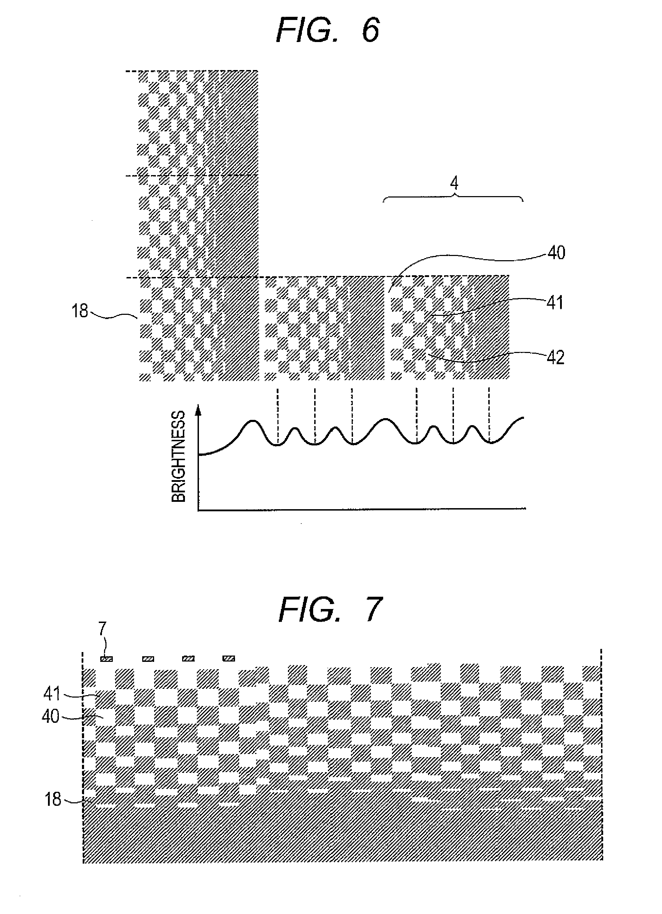

Next, explanation will be given about the technology for mitigating the difference of brightness between the brightness on the boundary of the backlight block and the brightness within the backlight block in the backlight device according to the present embodiment, thereby bringing the brightness on the boundary to be unremarkable, by referring to Figs. 6 and 7. Herein, an image of the space is shown in Fig. 6, wherein the backlight blocks 4 are connected in the direction perpendicular to the direction of the optical axis of the LED 7 and the direction of the optical axis. However, herein is shown the backlight block 4 having one (1) line and one (1) raw, for simplifying the illustration in the figure.

Fig. 6 is a view for giving explanation on an example of forming the pattern covering over the plural numbers of backlight blocks, for internationally generating the distribution of brightness (light/dark) in the lights from the backlight device according to the present embodiment, and Fig. 7 is a view for giving explanation about the brightness of the lights from the backlight device, i.e., the condition of generating the difference of brightness between the boundary of the backlight block and the inside of the backlight block, with aligning the plural numbers of the backlight blocks. The pattern in this embodiment is called a "light/dark pattern". In the figure, the "light/dark" pattern includes a light brightness portion 40, a dark brightness portion 41 and an intermediate brightness portion 42. However, herein, the above-mentioned difference of brightness (or the unevenness of brightness) means the difference of brightness when seeing the lights irradiating from the backlight device 3, from a side of an optical sheet or the like (see Fig. 2), including the diffusion plate, etc. , which emits the lights therefrom. Herein, the pattern of the light brightness portion 40 is the pattern having a function of diffusing the lights, being larger than those of the dark brightness portion 41 and the intermediate brightness portion 42 (thus, being high in the degree of roughness), and the pattern of the intermediate brightness portion 42 is the pattern having the function of diffusing the lights larger than that of the dark brightness portion 41.

As was mentioned above, when the plural numbers of the backlight blocks 4 are aligned in horizontal/vertical, the leakage of the lights from the boundary of the backlight blocks and/or just above the LED 7 brings about the bright line or the hot spot, and the light/dark portion of brightness is generated due to this. Or, on the contrary, there may be a chance that shortage of the lights is generated on the rear surface on the boundary of the backlight block and the rear surface of the LED 7, and thereby resulting into the dark line.

Then, in this example, such optical patterns 40, 41 and 42 as shown in the figure are disposed on the rear surface and/or the front surface of the optical element 2, so that the lights emitting from the light source can emit uniformly (i.e., in the direction of this side in the vertical direction on the figure), i.e., to be uniform in the brightness. Fig. 6 illustrates the patterns disposed on the rear surface. The densities of the patterns are adjusted appropriately, depending on the distance from a light entering portion of the LED 7 in the direction of the optical axis, and with this, the distribution of brightness comes to be uniform. In case of Fig. 6, the density is high a little bit at the light entering portion, and is low a little bit in a central portion, and the pattern being highest in the density is disposed at the tip portion. The graph shown below in Fig. 6 presents the density of the light/dark patterns corresponding to the positions of the optical elements 2. This light/dark patterns are formed by adding a diffusion concave/convex surface, a concave micro lens, a convex micro lens, a prism, a truncated cone, a cone or a print pattern, etc., on the rear surface of the optical element 2, which is made up with the diffusion plate, the acryl plate, the plate-like member pasted with the optical film, the polarization select plate, etc. In the place of this, a cut-out, a slit, a circular hole, an oval hole or a hole having a predetermined shape may be provided on an optical function filmhaving one (1) ormore numbers the functions, such as, the reflection, the shielding, the transmission, the propagation of the lights, etc. With this, it is possible to control the distribution of brightness of the lights emitting from the optical element 2, freely.

Within the backlight device according to the present embodiment, the intentional light/dark difference of brightness is formed within the backlight block, so that the unevenness of brightness reaches all over the entire thereof, and thereby mitigating line-like or grid-like light (or dark) portions of brightness on the boundary between the backlight blocks; thus, it is characterized of being difficult to be recognized, visually. In the example shown in Fig. 6 is shown the structure of disposing the dark brightness portion 41 and the intermediate brightness portion 42 (portions being dark a little bit comparing to the light brightness portion 40, but light comparing to the dark brightness portion 41), alternately, within the backlight block 4. Thus, the light/dark difference of brightness is provided within the backlight block 4, to mitigate the difference of brightness from the light portions of brightness on the boundary of the backlight block 4.

However, when the dark line is generated on the boundary, for making this dark line unremarkable, it is enough to provide a pattern, being darker than a surface of uniform brightness of the backlight block and brighter than the dark line mentioned above, so as to form the light/dark difference of brightness in the backlight block 4.

Also, this light/dark pattern has a rectangular shape, as is shown in Fig. 7, and is made up with squares, being arranged in a zigzag manner. In this instance, a pitch of arranging the rectangular-shaped light portions is gradually narrowed, from the LED 7 to the tip portion of the backlight block 4, i.e. , applying the configuration or arrangement for increasing the density thereof. Thus, the lights are emitted effectively as they come to the tip portion, and thereby increasing the uniformity within the block. At the same time, with this, inportions where the brightness changes extremely, such as, the vicinity of the LED 7 and/or the bright line or the dark line, etc. , a pattern having different shape may be provided and/or the size of the circular or the oval pattern may be changed. With such pattern (s) being optimized in the size and/or the shape thereof, both the function of increasing the uniformity of brightness and the function of bringing the difference of brightness to be unremarkable can be achieved. And, with this, it can be said that the light control portion 9 selects the lights propagating through the space, gradually, to be taken into the optical element 2, and therefore it is possible to control the lights emitting towards the liquid crystal panel 1.

With such the structure as shown in Figs. 6 and 7, i.e., providing the light/dark difference of brightness within the backlight block 4, since the unevenness of brightness comes to dim or blurred in the entire of the backlight 3, including the boundary thereof, therefore it is difficult to recognize the light portion of brightness on the boundary of the backlight block 4, visually. Further, with provision of a light shielding member, being made of a light shielding sheet or a light shielding print, etc., for example, at the position corresponding to the LED 7, together with the light control member 9, the lights directly emitting from the LED 7 is shielded, while transmitting through, reflecting thereon, or propagating apart of the lights, and thereby preventing a hot spot from being generated. In this instance, even when a very small leakage is generated of the lights emitting from the LED 7, since the lights are diffused by brightness/darkness of the zigzag pattern mentioned above, it comes to be unremarkable.

However, the light/dark difference of brightness mentioned above can be achieved, not limiting to form the pattern(s) on the optical element 2 or the light control member 9, but also on the reflection sheet 19, or the optical sheet or the like 18.

Also, not shown in the figure, an oval-shaped intermediate light/dark portion of brightness maybe formed within the backlight block 4. This intermediate light/dark portion of brightness can be formed with so-called a roughen surface, such as, a fine or dense concave/convex surface formed on the surface of the optical element 2. This oval-shaped roughen surface is aligned by plural numbers of thereof, on the optical element in the direction in parallel with the direction of alignment of LEDs 7 (e.g. , in the direction of short side of the optical element 2 in the present embodiment), and thereby forming a one (1) area or region of the intermediate light/dark portion of brightness, and this area is provided by two (2) or more numbers thereof, in the direction perpendicular to the direction of alignment of the LEDs 7 (e.g., in the direction of short/long sides of the optical element, in the present embodiment) . With this, those roughen surfaces achieve the function of enlarging an amount of lights advancing to the front than surrounding surfaces thereof, and thereby generating the light brightness.

When seeing the entire of the backlight device 3 including the boundaries of the backlight blocks 4, the unevenness or the non-uniformity is produced in the light/dark distribution of the brightness emitting ahead from this backlight device 3, due to existence of the intermediate light/dark portion of brightness, and it is difficult to recognize a degree of the light/dark of brightness, visually (i.e., the brightness on the boundary becomes unremarkable). The intermediate light/dark portion of brightness should not limited to the oval shape, but may be the circular shape or an oblong shape, or may be provided by a different number of pieces thereof, neighboring with each other (for example, a number of pieces in the direction of the vertical direction on the paper surface), such as, two (2) or three (3) pieces, for example. The point is that the intermediate light/dark portion of brightness can be formed, so that the non-uniformity of the difference of brightness can be generated between the dark portion of brightness.

In the embodiment mentioned above, an element for giving a light portion (hereinafter, being called "a light portion grant element") is formed on the surface of the optical element 2 (e.g. , the diffusion plate), such as, the roughen surface, the concave/convex surface, the prism surface, the concave lens or the convex lens, etc. , mentioned above, elongating in the direction in parallel with the direction of aligning the LEDs 7 (e.g., in the direction of the short side of the optical element 2, in the present embodiment), and at least two (2) or more numbers of this light portion grant element are aligned in the direction perpendicular to the direction of aligning the LEDs 7 (e.g., in the direction of the short side of the optical element 2, and in particular, in the direction, into which the lights from the LED advance within the optical element, in the present embodiment). With applying such structure, since on the surface of the optical element 2 can be produced the difference of brightness (i.e. , the unevenness of brightness), being shorter than a cycle of the light portion of brightness (or the dark portion of brightness) on the boundary portion of the backlight block 4, then that light portion of brightness (or the dark portion of brightness) on the boundary portion of the backlight block 4 is hardly recognized, visually.

The distance between the maximum points of brightness themselves among at least two (2) or more numbers of light portion grant elements is, preferably, approximately from 0.5 to 3 cm, and further, it is preferable to determine the distance between those maximum points themselves, being longer, at least two (2) times or more, than the distance from the surface of the diffusion plate up to a plane of incidence of the optical sheet or the like (the plane of incidence of the diffusion plate, which is disposed at the position closest to the diffusion plate). Also, the difference of brightness between the lights transmitting the light portion grant elements and the lights emitting from portions other than the light portion grant elements on the surface of the diffusion plate is preferably 50% or more than that, of the difference of brightness between the lights emitting from the light portion of brightness (or the dark portion of brightness) on the boundary portions of the backlight block 4 and the portion(s) other than the light portion grant elements on the surface of the diffusion plate. Forming the light portion grant elements in such a manner as to satisfy those conditions enables to bring the light portion of brightness (or the dark portion of brightness) on the boundary portions of the backlight block 4 to be unremarkable.

Also, with provision of the element for diffusing the lights mentioned above on the surface of the diffusion plate in the direction perpendicular to that of aligning the LEDs 7, the light portion of brightness (or the dark portion of brightness) on the boundary of the backlight block 4 generating in the direction perpendicular to that of aligning the LEDs 7 (in the left/right direction on the paper surface of Fig. 2) can be hardly recognized, visually. Of course, the element for diffusing the lights may be provided in both the direction in parallel with the direction of aligning the LEDs 7 and the direction perpendicular to that.

With such the structure of the embodiment as was mentioned above, it is possible to bring the light portion of brightness or the dark portion of brightness on the boundary of the backlight block 4 to be unremarkable; but it is also possible to bring the light portion of brightness or the dark portion of brightness, generating within the backlight block 4 other than that on the boundary, to be unremarkable.

### <Embodiment 2>

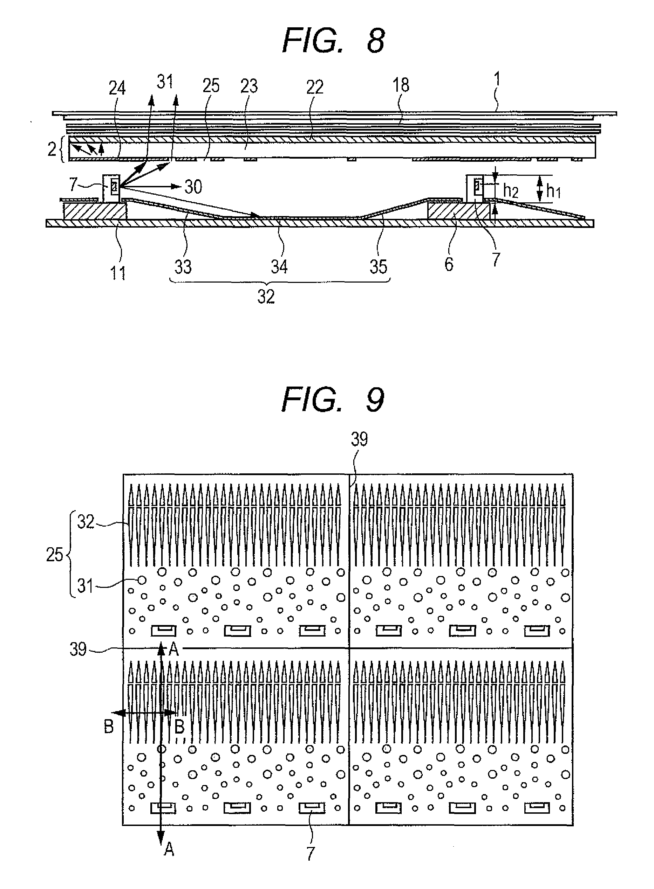

Fig. 8 is the cross-section view of the backlight device according to the present embodiment. Among the fundamental constituent elements, although the arrangements and the structures of the LEDs, being the light source, and the configuration of the optical sheet or the like are almost same to those of the embodiment 1 shown in Fig. 2; however the configurations of the reflection sheet for uniformly diffusing the lights from the LEDs and also the optical element 2 (i.e., an optical board) for taking out the lights onto the liquid crystal panel, uniformly, are different from. The details thereof will be apparent hereinafter.

In Fig. 8, the backlight comprises a group of optical sheets 18, the diffusion plate 2 as the optical element for guiding the lights from the LEDs 7, being the light source, an LED substrate 6, being a light source substrate disposing the LEDs 7 thereon, and a reflection sheet 32, in the order of being close to the liquid crystal panel 1. The LED substrate 6 and the reflection sheet 32 are mounted on the chassis 11 made of a metal. A group of optical sheets 20 in Fig. 8 is mounted on the diffusion plate 2. In the present embodiment, as the group of optical sheets 18 is used a one (1) piece of a prism sheet. As combination of the group of optical sheets 18, there may be included a one (1) or more numbers of diffusion sheet (s), other than the prism sheet, sometimes. There are also cases, for example, where no prism sheet is used therein, or where two (2) pieces of prism sheets are used, being piled up, and are so arranged that the ridges of the prisms come across with each other. Also, a part of the functions of the optical sheet may be omitted, but being taken into the diffusion plate 2.

The diffusion plate 2 has a roll of directing an array of light sources, which is constructed by arranging a large number of LEDs 7, being the dot-like light sources, on plural numbers of stages, in an array-like manner, towards the liquid crystal panel 1 as a uniform plane-like light source. The diffusion plate in the present embodiment is characterized that it has a multi - layer structure of piling up a diffusion layer 22, a transparent layer 23, a light shield layer 24 including a light takeout portion 25, and a polish layer not shown herein, in an order from that closest to the liquid crystal panel 1 (i.e., one by one, from the liquid crystal panel 1 to the chassis 11). The light takeout portion 25 is an opening (e.g., a penetrating hole), such as, a bore or a slit, etc., for example, which is provided on the light shield layer 24, as will be mentioned later.

The diffusion layer 22 is thin and plate-like in the shape thereof, and although, in the present embodiment, as the diffusion layer 22 is applied a diffusion plate, DRIIIC series, made by Nitto Jushi Kogyo Co., Ltd., having 1 mm thickness; however, it is also apply a diffusion plate, in the similar manner, if being lower than 80% in the transmission factor, and the thickness should not be limited to 1 mm, or it may be formed in one body by painting a resin, including particles having diffusibility therein, on a side of an acryl transparent resin substrate, being the transparent layer, facing to the liquid crystal panel, or mixing them into the transparent resin plate.

On a lower surface of the diffusion plate 22 is applied an acryl substrate, ACRYLITE (®) made by Mitsubishi Rayon Co., Ltd., having 1, mm thickness, as the transparent layer 23. This acryl substrate is mirror finished on both surfaces thereof, so that the haze value indicating the diffusibility thereof is suppressed down to around 0.5%. Almost of parts of the lights entering from the LEDs 7 into the transparent layer 23 are refracted or reflected on the mirror depending on an incident angle, without being diffused. Because the transparent layer 23 is a flat plate having both surfaces in parallel with, all of the lights entering into the transparent layer 23 due to refraction enter into the diffusion layer 22, in accordance with the Snell's law in relation to the refraction. On the other hand, in case where no transparent layer 23 is provided, since a part of the lights is diffused/reflected depending on the diffusibility or the transmission factor of the diffusion layer 22, it is difficult to take out a sufficient amount of lights therefrom, and then for the light takeout portion 25 it is necessary to be a large opening. In this case, separation of the functions becomes insufficient, between taking out of lights and propagation/guiding of lights, and in particular, when the size of the light source block is large, it is difficult to obtain the uniformity of brightness. According to the present embodiment, addition of the transparent layer 23 enables the lights to propagate to far, with uniformity.

Under the transparent layer 23 is formed the light shield layer 24 having the light takeout portion 25, for adjusting an amount of lights to be taken out depending on the intensity of the lights propagating/radiating from the LEDs 7 upon the lower surface of the diffusion plate.

In the present embodiment, adiffusion/reflectionsheetE6SP, made by TORAY INDUSTRIES, INC., having high brilliance on both surfaces thereof, is pasted on the acryl plate of the transparent layer 23, as the light shield layer 24, in one (1) body. As the structure according to the present embodiment, the polish or brilliant layer is not necessary between the transparent layer 23 and the light shield layer 24; however, since there cannot be found almost no difference in an index of refraction between the brilliant layer of the diffusion/reflection sheet and the transparent layer 23, there is no difference in the optical characteristics.

On the light shield layer 24, as is shown in Fig. 9, for example, plural numbers of pinholes 31 (e.g., circular holes) are formed in the vicinity of the LEDs 7, as the light takeout portion 25, through a method, such as, a stamping or a laser machining, etc., and in a portion where intensity of the lights propagating/radiating from the LEDs 7 is weak, slits 32 are formed, being long and narrow holes, for obtaining an improvement of a numerical aperture (or an opening ratio). Thus, in the present embodiment, the light takeout portion 25 is built up with openings, which are provided on the light shield layer 24.

Increasing the brilliance on the surface of the light shield layer 24 enables to guide the lights from the LEDs 7 to a faraway. The diffusion/reflection sheet E6SP, made by TORAY INDUSTRIES, INC., is high, 120%, in the brilliance, with respect to the incident light by 60 degrees, and therefore, comparing to the case of applying a normal diffusion/reflection sheet having the brilliance around 30%, there can be obtained a light guiding distance, as two (2) times longer as that of the normal one.

In the present embodiment, although as the light shield layer 24 is applied the diffusion/reflection sheet E6SP, made by TORAY INDUSTRIES, INC., but it should not be restricted to this. For example, in case where the size of the backlight block is large and it is required that a ratio of reducing or dimming the lights is large in periphery of the light source, it is possible to obtain the uniformity by applying the diffusion/reflection sheet, being low in the transmission factor of light beam, as the light shield layer 24. In case where the brilliance is not enough, a resin having the brilliance may be painted or a resin film having the brilliance may be pasted on the surface thereof.

In normal, when trying to propagate the lights to a faraway, it is commontoapplyan optical system, onlyusingmirror reflection therein; however, for the purpose of achieving the uniformity of brightness within the backlight block, it is a problem to be dissolved to satisfy both, maintaining the distance of light guiding, and at the same time, propagating the lights in between the LEDs 7, being disposed in a line-like manner and neighboring with each other, and al so behind the LED light source, too. According to the present embodiment, by taking such problem(s) into the consideration thereof, among the lights incident upon the diffusion plate, being the optical element 2, from the LEDs 7, the lights incident upon by a shallow angle are guided based on the mirror reflection, while the lights incident upon by a deep angle are guided in combination of the direct transmission and the diffusion/reflection by the light shield sheet, and also the transmission through the opening portions of the light takeout portion 25; thereby maintaining the uniformity of the lights emitting from the backlight.

In more details thereof, within the light shield layer 24, upon which the lights are irradiated from the LEDs 7, and also the transparent layer 22, at least a side surface, upon which the lights transmitting through the hole portions of the light takeout portion 25 are irradiated (i.e., the surface facing to the LEDs 7) is made byamirror surface, so as to reflect the lights thereupon, and thereby improving the characteristic of propagating the lights reflecting on the surface to a faraway, while for a component of light being diffused/reflected by the light shield layer 24, other than the surface reflection, a reflection sheet is applied, having high performance or capacity, not only of the front diffusion, but also the back diffusion.

As shown in Fig. 8, with utilizing thickness of the LED substrates 6, an inclining portion 33 is formed, on the reflection sheet32, inclining in the direction from the light emitting surface of the LEDs 7 to a bottom surface of the chassis 11 positioning, mutually, between the LED substrates 6. With this, an image made from the lights emitting from the LEDs 7 is expanded by the inclining portion 33 of the reflection sheet in the vicinity of the LEDs 7, and is projected upwards, the light intensity thereof is weakened, as well as, collimation of the reflection lights can be achieved in the distribution of lights due to a taper-edge effect by the inclination. Also, due to decrease of irradiation brightness upon the reflection sheet 32, the intensity of local irradiation lights, upon the light shield layer 24, due to this reflection light, is also lowered down and uniformed, and therefore it is possible to suppress generation of local high-brightness areas or regions in the vicinity of the LEDs, being called "a hot spot (s) ", greatly. Further, since an incident angle on a flat portion 34 of the reflection sheet 3 comes to be shallow, then it is possible to guide the light from the light source farther.

From the flat portion 34 up to an LED 7 of a next stage, because the reflection angle upon the surface of the reflection sheet 32 comes upwards, with provision of an inclining portion 35 directing from the surface of the chassis 11 towards the LED substrate 6, on the reflection sheet 32, a high efficiency of taking out the lights can be obtained, with compensating shortage of the amount of lights, which is generated due to separation far from the LED light source 30.

With controlling the transmission factor of the light shield layer 24, appropriately, there can be obtained a desired brightness only due to the lights reaching to the diffusion plate directly transmitting through the light shield layer 24, without forming the light takeout portion 25 on the light shield layer 24 in an area where the light intensity is most strong on the light shield layer 24. With this, it is possible to achieve the backlight having a uniform distribution of brightness, without generating the unevenness of brightness, being called the "hot spot (s) " caused due to the light source.

Also, the LEDs 7, in particular, light emitting portions thereof, are arranged to be close to an end portion of the LED substrate 6, andalso, as shown in Fig. 13, a center of light emission thereof is so determined that it come to above a center of the LED 7 in the direction of height thereof. The height "h₁" of the LED 7 is 1.7 mm, for example, the height "h₂" up to the center of light emission, the width "w", not shown in the figure, for example, 1.2 mm, the length of the LED 7 in the direction of depth is about 6 mm, respectively. Also, in Fig. 8, the lights from the LED 7 are irradiated, as shown by arrows in the figure, into the direction of the plane of the diffusion plate 2. With those characteristics, even if there is deflection in the reflection sheet 32 a little bit, the light emitting from the LED 7 disposed on the left-side in Fig. 8, for example, can propagate without being shielded by that deflection, and the reflectioncanbe reduced, upon the back surface of the LED 7 of the next stage (i.e., on the right side in Fig. 8), and therefore it is possible to restrain the hot spot (s), greatly, which is/are generated due to the lights reflecting on an end portion of the LED 7.

Fig. 9 shows therein an example of the light takeout portion 25 of the light shield layer 24. In Fig. 9 are shown patterns of the light takeout portion 25 on the light shield layer 24 in an area or region of 2x2 blocks, as the backlight blocks. In actual, there is no boundary line for the backlight blocks; however, herein, the boundary lines of the backlight blocks are shown by imaginary lines 39. Although, herein, the LEDs 7 are also illustrated in the figure, for an easy understanding of the relative positional relationship between the LED 7 and the light takeout portion 25 of the light shield layers 24; however, it is difficult to confirm the positions where the LEDs are arranged, by bare eyes, because the transmission factor of the light shield layer is low, when they are tuned ON, i . e. , around 2%. Positioning of the light shield layers and the LEDs 7 is conducted while running small current in the LEDs 7 to emit lights therefrom, or by setting alignment mark on the light shield layer 24, in advance.

As is shown in Fig. 9, no opening portion, neither the pinhole 31 nor the slit 32, is provided in the vicinity of the LED 7. Accordingly, in the vicinity of the LED 7, the brightness is determined by the transmission factor of the diffusion/reflection sheet forming the light shield layer 24. In the present embodiment, although as the light shield layer 24 is applied the diffusion/reflection sheet E6SP made by TORAY INDUSTRIES, INC., however, the lights of around 1.4% in the transmission factor at the wavelength 550 nm near to a central wavelength of a visible light transmit therethrough. In the present embodiment, the light takeout portion 25 is formed by the circular pinholes 31 in the vicinity of the LED 7, while forming the light takeout portion 25 by the slits 32 in the area or region far from the LED 7 in the distance. The slit-like light takeout portion 32 has such a shape that the width thereof comes to be wider as the distance from the light source increases. With this, the uniformity of brightness is maintained.

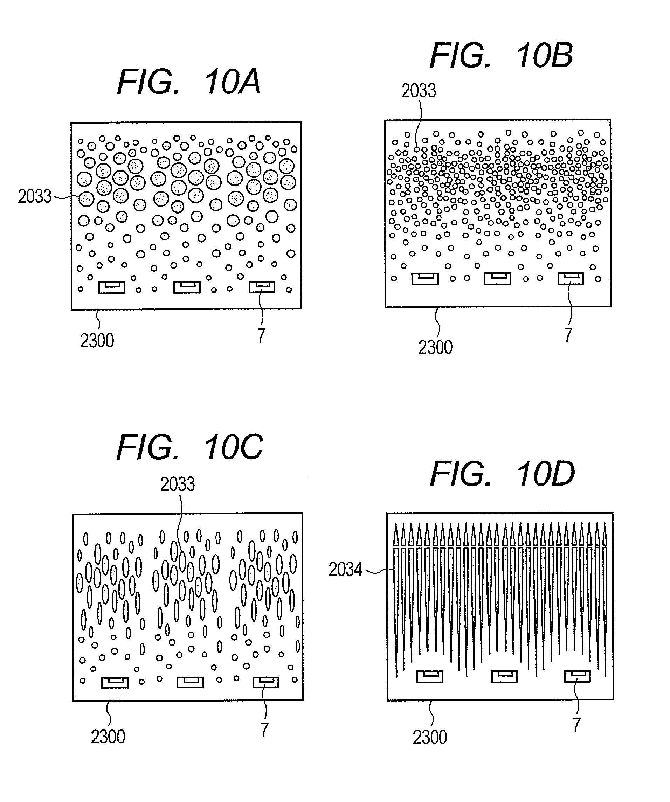

Figs. 10A to 10D show other embodiments of the light shield layer 24, for adjusting the amount of the lights to be taken out depending on the intensity of lights propagating/irradiating from the LEDs 7. In those Figs. 10A to 10D are illustrated the light shield layers 24, each for one (1) piece of the backlight block, respectively.

Fig. 10A shows an embodiment of building up, with only circular pinholes 2033. While keeping pitches of arrangement thereof almost constant, the diameter of the pinhole 2033 increases, in accordance with an increase of the distance from the light source. With keeping the density of arrangement of the pinholes 2033, the distribution of the lights can be controlled only by adjusting the diameter of the pinhole 2033.

Fig. 10B shows an embodiment of increasing the density of the pinholes, in accordance with an increase of the distance from the light source, while keeping the diameter of the pinhole to be constant. In the similar manner to that shown in Fig. 10A, there can be obtained the characteristics that the control of distribution of lights can be made easily, and at the same time, because of forming the holes of the same diameter, this is the configurationbeing superior in stability when manufacturing . Also, since the diameter of the pinholes is constant, an effect of the prism sheet can be obtained at constant within the light source block, and thereby being superior in the uniformity of the optical characteristics.

In the present embodiment, it is also possible to form the diffusion plate by a resin plate made of transparent acryl resin, or polycarbonate resin, with changing the density of arrangement of the pinholes having a fine diameter depending on the intensity of the lights irradiating thereon. In this instance, the thickness of the plate must be sufficient for mixing up the lights passing through the neighboring pinholes, fully, and if assuming that the maximum distance between the pinholes is about 1 mm, then the uniformity can be obtained with the thickness of about 3 mm of the transparent resin plate.

According to the present method, as the group of optical sheets 18 to be piled up on the transparent resin plate, one (1) ortwo (2) piece (s) of the diffusion sheet (s) D121U, made by TSUJIDEN Co., Ltd., are disposed, and thereby the backlight without unevenness of brightness can be achieved. With this, a thin-type backlight being superior in the uniformity can be achieved, without using the diffusion plate or the prism sheet, being expensive, and also piling up of the diffusion plate on the transparent resin enables to achieve thin-sizing, without miniaturizing the pinholes and/or the slits so much.

Fig. 10C shows an embodiment of deforming the shape of the pinhole 2033, gradually, into an oval shape including a circle therein, i.e., a slit-like shape, by changing the oblateness of an oval depending on the intensity of lights. The major axis of the oval is in parallel with the optical axis of the LED 7. Because of smoothness in changing of the shape from the circular pinhole to the oval, it is possible to achieve both, a high aperture ratio (or an opening ratio), e.g. , the characteristic of the slits, and also micromachining of the pinholes.

Fig. 10D shows an embodiment of being formed with only triangle slits. With the present configuration, i.e., the high aperture ratio (or the opening ratio), being the characteristics of the slit, and fitting the direction of ridges of prisms of the prism sheet to the longitudinal direction of the slits, in other words, brining the longitudinal direction of the slits to be in parallel with the direction, in which the prisms of the prism sheet extend, it is possible to reduce or suppress the unevenness of brightness, greatly, which can easily appear in the longitudinal direction of the slits, being called an "uneven slit".

The configuration of the light takeout portion 2032 (e.g., the opening) mentioned above can be selected into an appropriate shape, depending on combination with the group of optical sheets 18 or an accuracy when machining the light takeout portion 25.

Also, the light shield layer 24 may be painted with the high brilliant resin or pasted with the high brilliant resin film on the surface thereof, after being formed on the lower surface of the diffusion plate.

Since application of the resin film of high brilliance enables to obtain high propagating characteristics, without using the diffusion/reflection sheet of high brilliance, it is possible to achieve a backlight capable with the size of a large-size light source block. Further, as a secondary effect thereof, since it is laminatedorpasted, after forming the pinholes and/or the slits, the resin film also functions, of an improvement of an anti-sticking, an index against rubbing or abrasion, and as a protection layer for preventing the characteristics from being deteriorated due to accumulation or adhesion of dusts in the hole portions.

Also, with forming the light takeout portion 25 by holes, being large a little bit, a print pattern of high accuracy may be treated on any surface of the transparent layer 23 or the side of the diffusion layer 22 facing to the LED 7, and thereby obtaining a duplicated light shield structure, jointly applying the forming of the detail patterns of the light takeout portion 25.

In the structure of the present embodiment, since the LEDs 7, being the dot-like light source, are aligned in a line-like manner below the diffusion plate 2, it is possible to control the brightness for each area or region of a screen, i.e., an area control. Herein, the area control means control, such as, while lighting up the LEDs 7 of the backlight block corresponding to a bright portion of the screen, the LEDs 7 of the backlight blocks corresponding to a dark portion are not lighten up or turned to be dark, for example.

Such area control can be achieved by lighting up only the LEDs 7 of the backlight blocks corresponding to the bright portion, while memorizing video information in a frame memory and by discriminating or identifying the bright portion and the dark portion on the screen. With conduction of such area control, it is possible to obtain reduction of the power consumption and also an improvement of the contrast.

In this manner, according to the present embodiment, controlling the LEDs 7 for each backlight block 4, separately, enables the area control (i.e., the local dimming) depending on the video.

In Fig. 4 or 5, if putting the diffusion plate, being the optical element 2, on the LED substrate 6, the LEDs 7 disposed in the line-like manner lie extending in the horizontal direction in the space defined by pin molds 38 below the diffusion plate 2. With such arrangement of the LEDs 7, comparing to the backlight of the conventional side-light type, it is possible to reduce an area of a frame region on the periphery of the display area of the liquid crystal display apparatus.

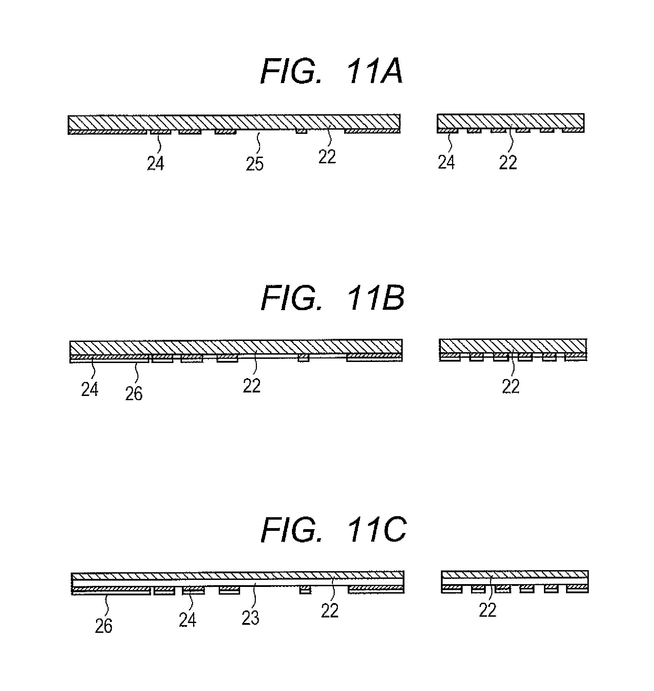

Figs. 11A to 11C are the cross-section views for showing other configurations of the diffusion plate 2. The view on the left-side in each figure shows an A-A cross-section along with the direction for the lights to advance from the light source, while the view on the right-side shows a B-B cross-section in the vicinity of the slits.

Although the fundamental configurations are similar to that shown in Fig. 8, but they are **characterized in that** the functions of the present embodiment is achieved, without applying the diffusion/reflection sheet having the high brilliance. Fig. 11C shows the similar configuration to that shown in Fig. 8, and therefore an explanation thereof will be omitted herein.

Fig. 11A shows the most simple configuration according to the present embodiment, wherein the light shield layer 24 having the light takeout portion 25 is laminated, as a selective transmission factor control layer for enabling to control the transmission factor, selectively, depending on the relative and positional relationship between the diffusion layer 22 and the light emitting source. No transparent layer 23 is included therein. Since applying the diffusion plate made of acryl resin, which is manufactured according to a casting method, etc. , as the diffusion layer 22, enables to keep the property of the mirror surface on the side facing to the light source, and therefore it is possible to maintain the distance, being sufficient for guiding the lights upon the reflection on the mirror surface; i.e., the present method is applicable into the light source block of about 10 cm square size. According to the present embodiment, it is possible to achieve the backlight device for enabling the area control, being superior in the uniformity, with relatively low costs.

Fig. 11B shows the configuration of adding a brilliant layer 26 on the surface of the structure shown in Fig. 11A. As the brilliant layer 26 is preferable COSMOSHINE 4100 made by TOYOBO Co., Ltd., etc., for example, having high transmission factor and low haze. Since the present embodiment brings about a preferable property of the mirror surface, it can be applied into the light source block of large-size.

Figs. 12A to 12C are the cross-section views for explaining about further other embodiments of the diffusion plate 2. The view on the left-side in each figure shows the cross-section in the direction in parallel with the optical axis of the LED 7 from the light source, while the view on the right-side shows the cross-section in the direction perpendicular to the optical axis of the LED 7.

Although the fundamental configurations are similar to those shown in Figs. 11A to 11C, but they are **characterized in that**, in each, the prism layer 27 is formed with the diffusion plate 22 on one body. Herein, each of the prisms of the prism layer 27 is formed, as shown in the figure, extending in the direction in parallel with that of the optical axis of the LED 7, and plural numbers thereof are aligned in the direction perpendicular to the optical axis of the LED 7. The fundamental structure is similar to that of the embodiment 2, except for that the prism layer 27 is formed with the diffusion layer 22 in one (1) body. According to the present embodiment, an interface between the prism sheet and the diffusion layer 22 can be removed from, and therefore it is possible to achieve the backlight device having high efficiency of taking out the lights.

As was mentioned above, according to the present embodiment, in spite of the simple structure thereof, it is possible to obtain an appropriate uniformity of brightness by increasing an ef f iciency of utilizing the lights from the light source. Thus, with the simple structure, not applying the light guiding plate, which is necessary in the conventional optical system for obtaining the plane-like light source, it is possible to obtain the uniformity of lights within the surface of the backlight block, or the uniform distribution of brightness covering over the entire light emitting surface of the backlight. Also, with the patterns having the predetermined shapes mentioned above, the difference of brightness from the boundary of the backlight block can be mitigated or made unremarkable, and therefore it is also possible to reduce the unevenness of brightness within the surface of the backlight block.

Also, with controlling the plural numbers of the light sources corresponding to each backlight block to be one (1) group of the light sources, it is possible to control the brightness for each backlight block.

The present invention maybe embodied in other specific forms without departing from the spirit or essential feature or characteristics thereof. The present embodiment(s) is/are therefore to be considered in all respects as illustrative and not restrictive, the scope of the invention being indicated by the appended claims rather than by the forgoing description and range of equivalency of the claims are therefore to be embraces therein.

## Claims

1. A backlight device, for irradiating lights on a liquid crystal panel, comprising:
plural numbers of backlight blocks, wherein
each backlight block has a sheet-shaped reflection member, which is disposed on a bottom surface of said backlight block, a plate-shaped optical element, which is provided facing to said reflection member and is disposed separating in direction perpendicular to a light irradiating surface of said backlight from said reflection member, and a light source, which is disposed within a space between said optical element and said reflection member, for emitting the lights in direction in parallel with the light irradiating surface of said backlight, whereby
the lights from said light source transmit through said optical element, propagating while being reflected repetitively within the space defined between said optical element and said reflectionmember, so as to guided on said light irradiating surface of said backlight.

2. The backlight device, as described in the claim 1, wherein said light source is a light emitting diode of side-view type.

3. The backlight device, as described in the claim 1, wherein a predetermined pattern is formed on said optical element and/or said sheet-shaped reflection member.

4. In a backlight device, for irradiating lights on a liquid crystal panel, being constructed by disposing plural numbers of backlight blocks in parallel with in direction of a surface of said backlight device,
each of said backlight blocks has light sources, each having a light emission axis in direction in parallel with the light irradiating surface of said backlight device, which are aligned in direction perpendicular to said emission axis, a sheet-shaped reflection member for reflecting emission lights from said light sources, and a plate-shaped optical element, which is disposed separating from said reflection member by a predetermined distance, for guiding the lights from said light sources to said liquid crystal panel, wherein
a light control member for controlling or adjusting an amount of light emission is provided on a rear surface or a front surface or both surfaces of said optical element, or in vicinity thereof.

5. The backlight device, as described in the claim 4, wherein said light control member has at least two (2) or more numbers of functions, including reflection, transmission, diffusion, shielding, absorption, re-emission, coloring, wavelength conversion and polarization of lights.

6. The backlight device, as described in the claim 4 , wherein patters of a predetermined shape(s) are provided on said light control member or said optical element, and a pitch or a density or a shape of said patterns in horizontal direction is changed depending on a position of said light control member or said optical element, while keeping the pitch or the density or the shape of said patterns to be nearly equal to, in direction perpendicular to the optical axes of said light sources and indirection inparallel with the light emitting surface or a rear surface of said optical element.

7. The backlight device, as described in the claim 6, satisfying a condition, p≥a≥c, where assuming that largeness of said pattern is "a", in the direction perpendicular to the optical axes of said light sources, and in direction in parallel with the light emitting surface or the rear surface of said optical element, largeness of each light emitting surface is "c"of said light sources, and a pitch of the light sources is "p".

8. The backlight device, as described in the claim 7, further satisfying a condition, p≥a≥0.5×e, where assuming that a pitch of said patterns is "e".

9. The backlight device, as described in the claim 7, further satisfying a condition, h≥a, where assuming that a distance is "h" between said optical member and said reflection member.

10. Thebacklight device, as described in the claim 6, wherein other pattern is provided at a position corresponding to that between two (2) light sources neighboring with each other, and a transmission factor "T" of said other pattern satisfies a condition, 0.1%≤T<50o.

11. The backlight device, as described in the claim 6, wherein the patter of said predetermined shape has a deformed surface, having a concave/convex surface, a prism, a convex lens or a concave lens, and said deformed surface is formed through a mold injection, a laser machining or a printing.

12. A backlight device, for irradiating lights on a liquid crystal panel, comprising:
plural numbers of backlight blocks, wherein
each backlight block has a sheet-shaped reflection member, which is disposed on a bottom surface of said backlight block, a plate-shaped optical element, which is provided facing to said reflection member and is disposed separating in direction perpendicular to a light irradiating surface of said backlight from said reflection member, and a light source, which is disposed within a space between said optical element and said reflection member, for emitting the lights in direction in parallel with the light irradiating surface of said backlight, whereby
said optical element has a transmission factor control layer, which changes the transmission factor thereof depending on a relative and positional relationship with respect to said light source, and a diffusion layer.

13. The backlight device, as described in the claim 12, wherein said optical element builds up a laminated structure of piling up a brilliant layer, said transmission factor control layer, a transparent layer, and a diffusion layer, in an order starting from said light source.

14. The backlight device, as described in the claim 12, wherein a prism layer is laminated on said diffusion layer.

15. The backlight device, as described in the claim 12, wherein said selective transmission factor control layer is made up with a light shield layer having plural numbers of light takeout portions, and sizes of said light takeout portions differ from depending on distance from said light source.

16. The backlight device, as described in the claim 15, wherein said light takeout portion of said light shield layer is an opening of either one of a circular shape, an oval shape, or a slit shape, or a combination thereof.

17. The backlight device, as described in the claim 15, wherein a prism sheet is applied as an optical sheet to be disposed between said liquid crystal panel and said optical element, and said light takeout portion includes a slit-shaped opening, and further a longitudinal direction of said slit and direction, in which the prisms of said prism sheet expand, are in parallel with each other.

18. The backlight device, as described in the claim 12, further comprising a light source substrate for mounting said light sources thereon, and said light sources are mounted on said light source substrate in such a manner hat the light emitting surfaces of said light sources are nearly coincident with an end portion of said light source substrate.

19. The backlight device, as described in the claim 12, said reflection member has an incline portion being inclined directing from an upper portion of said light source substrate to a bottom surface of said backlight.

20. A liquid crystal display apparatus, applying therein a liquid crystal panel and the backlight device, as is described in the claim 1.
